# EUROPEAN PATENT APPLICATION

(11) **EP 1 039 204 A2**
(43) Date of publication of application: **27.09.2000**
(21) Application number: 00301979.1
(22) Date of filing: 10.03.2000
(51) Int. Cl.: F16L 21/08, F16L 37/084

(54) **Push fit connector**

(30) Priority: 19.03.1999 GB 9906229
(71) Applicant: DELTA CAPILLARY PRODUCTS LIMITED, London WC2B 6XF (GB)
(72) Inventor: Darwin, Richard Paul, Tamworth, Staffordshire B79 OH7 (GB)
(74) Representative: Kinrade, John

(57) **Abstract**

A push fit connector (400) for use as an attachment to connect two pipes (100,101) has two connecting portions (10,11) at opposite sides of an inwardly deformed ridge (2) in outer tubular metal body (302) having inwardly deformed lips (8,8') at each end around a respective entrance opening to the corresponding connecting portion (10,11). The connecting portions are similarly arranged and substantially symmetrically disposed with respect to the ridge. Connecting portion (11) has an annular abutment element (3'), an elastomeric sealing ring (308), an annular intermediate abutment (310), a grab ring (312) with inwardly directed teeth in a frusto-conical array, an outer bush (314) and a sleeve (316) axially slidable in the bush (314). When the sleeve (316) is pushed inwardly of the connecting portion (11) a wedge-shaped annular head or lip on the sleeve acts on the teeth of the grab ring (312) to displace them radially outwards so they can disengage from the pipe (101) thus releasing it so that it can be pulled out of the connector (400). Dotted line C demarcates an end of the envelope of the attachment (400). Teeth releasing movement by the sleeve (316) can only begin to occur once end face (342) on a free end of the sleeve is substantially flush with end C of the envelope or is actually wholly within the envelope. End face (342) faces outwardly from the body (302).

## Description

This invention relates to a push fit connector for use as an attachment to one or more pipes.

The push fit connector, for use as an attachment to one or more pipes, is of a type hereinafter called "the type referred to" comprising at least one hollow connecting portion adapted to receive, when the connector is in use, a pipe through an opening at an end of the connecting portion, said connecting portion comprising an outer tubular body containing connection means comprising a grab ring to engage and resist removal of a said pipe inserted through said opening into the connector, and said grab ring being constrained against exit of the grab ring from the connecting portion via said end of the connecting portion

An object of the invention is to provide a connector of the type referred to having at least one component which when moved can initiate release of the grab ring from a pipe hitherto engaged thereby, but is so constructed that an inadvertent release of the grab ring, such as by an end of the connector being pressed or held against a structural element in a situation where the connector is being used, cannot take place or there is at least a relatively low risk of inadvertent release taking place.

According to the invention there is provided a push fit connector for use as an attachment to one or more pipes, said connector comprising at least one hollow connecting portion adapted to receive, when the connector is in use, a pipe through an opening at an end of the connecting portion, said connecting portion comprising an outer tubular body containing connection means comprising a grab ring to engage and resist removal of a said pipe inserted through said opening into the connector, said grab ring being constrained against exit of the grab ring from the connecting portion via said end of the connecting portion, grab ring release means comprising at least one component within said body and moveable relatively to the body in an axial direction thereof from said end of the body in a grab ring release movement which results in at least a radial inner part of the grab ring moving radially outwardly of the ring axis whereby the grab ring disengages sufficiently from said pipe, when the connector is in use, to allow said pipe to be extracted from the connecting portion, said component having a free end with a surface facing in a direction away from the body for external force applied to said surface in the axial direction inwardly of the body to move the component and the body and said component being so arranged that no movement constituting a grab ring release movement can occur unless said component is substantially wholly within said body.

At or adjacent to said end of the connecting portion a part of the tubular body may be deformed inwardly of the body at an end of said body by a rolling or other forming process to define an inwardly extending protuberance acting as a constraint opposing exit of the grab ring from the connecting portion via said end of the connecting portion.

No grab ring release movement can occur until the said surface is at least substantially flush with the end of the body. Preferably the grab ring release movement of the component cannot occur until said component is wholly within an envelope defined by the body.

The component may have a wedge-shaped face to act on the grab ring.

The component may be a sleeve slidable within an outer bush disposed in the body. Preferably the sleeve can receive a pipe when the latter is inserted into the connector. Thus the sleeve may provide support for a pipe at an entrance to the connector.

In a preferred embodiment, the aforesaid part of the body is deformed about or over the outer bush.

The invention will now be further described by way of example, with reference to the accompanying drawings in which:-
**Figure 1** is a longitudinal section of a push fit connector formed according to the invention in which the connection is in the form of an end cover or cap to block off an end of a pipe; and
**Figure 2** is a longitudinal section of another embodiment of push fit connector formed according to the invention to which the connector can be used to join two pipes.

In the drawings like or comparable parts are identified by the same reference numerals.

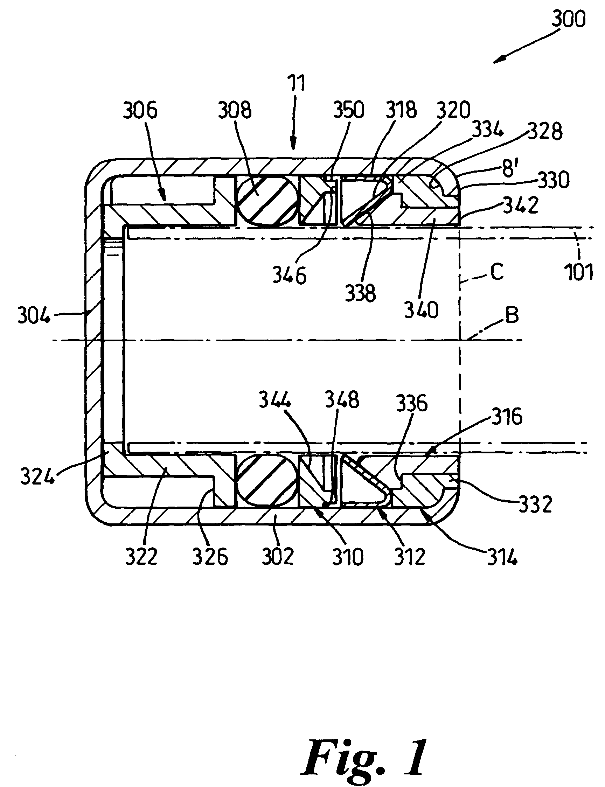

With reference to Figure 1 a push fit connector 300 in the form of a stopping off end cap or cover for an end of a push fitted pipe 101 (shown in phantom lines) has a tubular body 302 which may be of metal, for example copper or brass, closed at one end by an end wall 304. Effectively the connector 300 is a connecting portion 11 comprising the body 302, an annular end abutment element 306, elastomeric sealing ring 308, an annular intermediate attachment element 310, a grab ring 312, an outer bush 314, and a sleeve 316. The components 306, 310, 314 and 316 may be of metal, for example copper or brass, or of plastics material.

Also the grab ring 312 may be of resilient metal, for example a stainless steel.

The grab ring has an outer cylindrical flange 318 radiusing into a frustoconical annulus 320 having gripping teeth at its inner periphery which grip into a wall of the inserted pipe 101 to resist its withdrawal from the connector 300 whilst the seal 308 around the pipe wall prevents passage of fluid from the pipe out of the connector. All the aforementioned annular or cylindrical components of the connector 300 are substantially centred on an axis B.

End abutment element 306 has a cylindrical body 322 providing support and guidance for the open end part of the pipe 101 and radially inner and outer end flanges 324 and 326 respectively providing an abutment for the pipe mouth and for the sealing ring 308 supported at its other side by the intermediate abutment 310.

At what might be conveniently termed an open end of the connector 300, to receive the pipe 101 during insertion thereof, is provided the outer bush 314 in which the inner sleeve 316 can slide axially. The outer bush 314 has a curved outer surface part 328 over or about which an end 8' of the body 302 is deformed by rolling or other means to form a neat curved inwardly directed end flange or projection 330 providing an abutment for the bush which has an axial flange 332 at its end outermost of the connector to receive the projection 330. At the opposite end the bush 314 is counterbored to provide an outer axial flange 334 to abut the radiused part of the grab ring 312 and a shoulder 336 providing an abutment for a wedge shaped annular head 338 on an innermost end of cylindrical shank 340 of the sleeve 316. But the bush 314 need not be counterbored. It may have a plain end face for abutment by the head 338. Also the end of the outer bush 314 need not have the curved surface part 328 which could, for example, be squared off or plain to form a flat end face or shoulder adjacent to the flange 332, the body 302 being deformed accordingly.

Sleeve shank 340 has a free end with an outermost annular end face 342 which preferably, when the connector 300 is in use, does not extend outwardly thereof beyond an end boundary (indicated at C) of the envelope defined by the body 302, and in the drawing the end face 342 is shown substantially flush with the end 8' of the body. The end face 342 faces in a direction away from the body 302. When the sleeve 316 is pushed axially inwardly of the connector 300, relatively to the bush 314 and body 302, the sleeve head 338 pushes the grab ring annulus 320 radially outwardly to disengage from the pipe 101 which may then be extracted from the connector. To accommodate such radial outwards flexing, the intermediate abutment 310 has a conical counterbore 344 leaving a space to receive the displaced annulus 320. The abutment 310 also has annular axial flange 346 leaving an outer annular shoulder 348 which with the body 302 forms an axial annular groove 350 which can receive the grab ring flange 318 during assembly of the connector 300 to assist in the correct alignment and stacking of connector components within the body 302 during manufacture of the connector.

The sleeve shank 340 provides support and guidance for a pipe 101 disposed in the connector 300.

Only by application of a special tool to the end face 342 can the sleeve 316 be pushed inwardly of the connector 300 to cause release of the grab ring 312 from the pipe 101. Axial movement of the sleeve 316 actually causing the grab ring annulus 320 to flex radially outwardly sufficiently to allow release of the pipe is a grab ring release movement. Such release movement cannot commence until the end face 342 is substantially flush with the body envelope boundary C even if manufacturing tolerances were to allow the end face 342 to initially project to the right in Figure 1 somewhat beyond boundary C. Thus when the connector is in use, the chance of inadvertent release of the grab ring is low. For example if the end of 8' of the body 302 is held or pressed against some object, the chance of that object causing a grab ring release movement by the sleeve is minimal.

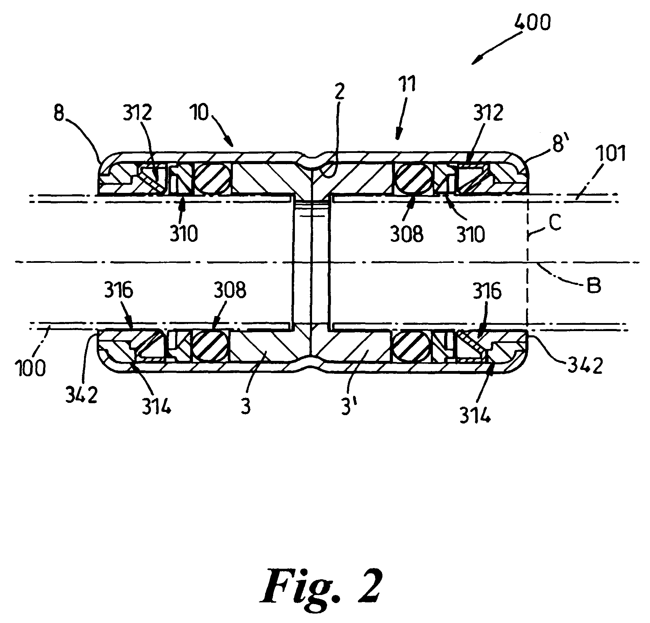

Figure 2 shows a connector 400 for joining ends of two pipes 100, 101 shown in phantom lines. The connector 400 has a tubular body, which may be of metal, for example brass or copper, with a groove rolled into the body to form an inwardly directed ridge 2. The connector 400 comprises the connecting portion 11 and another connecting portion 10 symmetrical with and similar thereto both comprising spacer and abutments elements 3 and 3'. End 8 of the body 1 at the connecting portion 10 is similar to the end 8'.

## Claims

1. A push fit connector (300; 400) for use as an attachment to one or more pipes (101; 100), said connector comprising at least one hollow connecting portion (11; 10) adapted to receive, when the connector is in use, a pipe (101) through an opening at an end (8') of the connecting portion, said connecting portion comprising an outer tubular body (302) containing connection means comprising a grab ring (312) to engage and resist removal of a said pipe (101) inserted through said opening into the connector, said grab ring being constrained (314, 330) against exit of the grab ring from the connecting portion via said end (8') of the connecting portion, grab ring release means (316) comprising at least one component within said body (302) and moveable relatively to the body in an axial direction thereof from said end (8') of the body in a grab ring release movement which results in at least a radial inner part (338) of the grab ring moving radially outwardly of the ring axis (B) whereby the grab ring (312) disengages sufficiently from said pipe (101), when the connector is in use, to allow said pipe to be extracted from the connecting portion, said component (316) having a free end with a surface (342) facing in a direction away from the body (302) for external force applied to said surface (342) in the axial direction inwardly of the body to move the component (316), and the body (302) and said component (316) being so arranged that no movement inwardly of the body that constitutes a said grab ring release movement can occur unless said component (316) is substantially wholly within said body (302).

2. A push fit connector as claimed in Claim 1, in which at or adjacent to said end (8') of the connecting portion a part of the tubular body (302) is deformed inwardly of the body at an end of said body by a rolling or other forming process to define an inwardly extending protuberance (330) acting as a constraint opposing exit of the grab ring (312) from the connecting portion via said end of the connecting portion.

3. A push fit connector as claimed in Claim 1 or Claim 2, in which no grab ring release movement can occur until the said surface (342) is at least substantially flush with the end (8') of the body (302).

4. A push fit connector as claimed in Claim 3, in which the grab ring release movement of said component (316) cannot occur until said component is wholly within an envelope (C) defined by the body (302).

5. A push fit connector as claimed in any one preceding claim, in which said component (316) has a wedge-shaped face (338) to act on the grab ring (312).

6. A push fit connector as claimed in any one preceding claim, in which said component is a sleeve (316), and said sleeve is slidable within an outer bush (314) disposed in the body (302).

7. A push fit connector as claimed in Claim 6, in which said sleeve (316) receives a said pipe (101) when the latter is inserted into the connector (300; 400) when the connector is in use.

8. A push fit connector as claimed in Claim 6 or Claim 7, in which the sleeve (316) is arranged for providing support (340) for a said pipe (101) at an entrance to the connector (300; 400) when the connector is in use and the pipe inserted thereinto.

9. A push fit connector as claimed Claim 2 and in any one of Claims 6 to 8, in which said part (330) of the body (302) is deformed about or over the outer bush (314).

10. A push fit connector as claimed in any one preceding claim, in which there are at least two said connecting portions (10, 11) receiving a respective said pipe (100; 101)
